# EUROPEAN PATENT SPECIFICATION

(11) **EP 3 771 057 B1**
(45) Date of publication and mention of the grant of the patent: **21.06.2023**
(21) Application number: 19919445.7
(22) Date of filing: 08.03.2019
(51) Int. Cl.: H02H 7/18, H01M 10/10, H02J 7/00, H02H 3/087

(54) **CELL PROTECTION CIRCUIT AND ELECTRONIC DEVICE**
ZELLENSCHUTZSCHALTUNG UND ELEKTRONISCHE VORRICHTUNG
CIRCUIT DE PROTECTION DE CELLULE ET DISPOSITIF ÉLECTRONIQUE

(43) Date of publication of application: 27.01.2021
(73) Proprietor: GUANGDONG OPPO MOBILE TELECOMMUNICATIONS CORP., LTD., Wusha, Chang'an Dongguan Guangdong 523860 (CN)
(72) Inventor: CHEN, Shebiao, Dongguan, Guangdong 523860 (CN); ZHANG, Jun, Dongguan, Guangdong 523860 (CN); ZHANG, Jialiang, Dongguan, Guangdong 523860 (CN)
(74) Representative: Hoffmann Eitle
(86) International application number: PCT/CN2019/077555
(87) International publication number: WO 2020/181437

(56) References cited:
- CN-A- 106 787 116
- CN-U- 203 233 151
- CN-U- 204 928 304
- CN-U- 204 928 304
- US-A- 5 583 384
- US-A- 5 789 900
- US-A- 6 014 030
- US-A1- 2009 146 610
- US-B2- 8 861 150

## Description

### TECHNICAL FIELD

The present disclosure relates to a field of circuit technologies, and more particularly, to a cell protection circuit and an electronic device.

### BACKGROUND

In electronic devices that driven by electric energy, such as mobile phones, drones, and smart wearable devices, the electric energy required by the electronic devices is typically provided by batteries provided on the electronic devices.

The battery in the electronic device has two output interfaces, and the battery supplies power to components in the electronic device through the two output interfaces. However, there are various types of components in the electronic device, and different components have different power supply requirements. Currently, the design of the two output interfaces can only output one type of electrical signals, which cannot meet the power supply requirements of different components, such that the electrical signal output by the battery needs to be converted into an electrical signal required by the component through a conversion module. However, this method is costly and requires a large space of the electronic device. Further, an existing protection circuit of the battery is only designed based on two output interfaces thus the requirements of multiple interfaces cannot be met. Battery protection circuits are also disclosed in the following documents: US2009146610, CN204928304U, US5789900, US6014030 and US5583384.

### SUMMARY

Embodiments of the present disclosure provide a cell protection circuit and an electronic device, for a purpose of providing three or more output interfaces in the cell protection circuit and realizing charging and discharging protection of the cell based on the output interfaces.

In accordance with one first aspect of the present invention, the appended independent claim 1 defines a cell protection circuit comprising a control module, multistage cell units coupled in series and N output interfaces; wherein
a positive electrode of a first-stage cell unit and a negative electrode of a last-stage cell unit are each coupled to an output interface, and a negative electrode of each upper-stage cell unit and a positive electrode of an adjacent lower-stage cell unit are coupled to a same output interface;
a protection module comprising a charging protection sub-module and a discharging protection sub-module is coupled between at least one output interface in the N output interfaces other than the output interface coupled to the positive electrode of the first-stage cell unit and the output interface coupled to the negative electrode of the last-stage cell unit and a cell unit coupled to the at least one output interface;
the control module is coupled to the protection module, and is configured to control the protection module to be turned off when an electrical signal on a path where the protection module is located is abnormal; and N is an integer greater than or equal to 3;
the charging protection sub-module is coupled to the control module, the control module is configured to control the charging protection sub-module to be turned off in response to detecting an electrical signal on a path where the charging protection sub-module is located is abnormal during charging of the cell unit; and
the discharging protection sub-module is coupled to the control module, and the control module is configured to control the discharging protection sub-module to be turned off in response to detecting an electrical signal on a path where the discharging protection sub-module is located is abnormal during discharging of the cell unit.

In an embodiment, the at least one output interface includes output interfaces other than the output interface coupled to the negative electrode of the last-stage cell unit in the N output interfaces.

In an embodiment, the at least one output interface includes output interfaces other than the output interface coupled to the positive electrode of the first-stage cell unit in the N output interfaces.

In an embodiment, the at least one output interface includes the output interface coupled to the positive electrode of the first-stage cell unit and the output interface coupled to the negative electrode of the last-stage cell unit.

In an embodiment, the charging protection sub-module includes a first MOS transistor, a first end of the first MOS transistor is coupled to the control module, a second end of the first MOS transistor and the first end of the first MOS transistor are coupled through a resistor; and the second end of the first MOS transistor and a third end of the first MOS transistor are respectively coupled to the control module. The control module is configured to determine whether an electrical signal on a path where the first MOS transistor is located is abnormal based on a voltage drop across the second end of the first MOS transistor and the third end of the first MOS transistor during charging, and control the first MOS transistor to be turned off when the electrical signal on the path where the first MOS transistor is located is abnormal.

In an embodiment, the charging protection sub-module includes a charging detection component and a charging switch coupled in series on the path where the charging protection sub-module is located, and both ends of the charging detection component and a control end of the charging switch are coupled to the control module. The control module is configured to determine whether an electrical signal on a path where the charging detection component is located is abnormal based on a voltage drop across both ends of the charging detection component, and control the charging switch to be turned off when the electrical signal on the path where the charging detection component is located is abnormal.

In an embodiment, the charging detection component is a MOS transistor or a first resistor.

In an embodiment, when the charging detection component is the first resistor, the charging switch is a third MOS transistor. A first end of the third MOS transistor is coupled to the control module, and the control module is configured to control the third MOS transistor to be turned off when a voltage drop across the first resistor exceeds a preset threshold during charging of the cell unit.

In an embodiment, the discharging protection sub-module includes a second MOS transistor, a first end of the second MOS transistor is coupled to the control module, and a third end of the second MOS transistor and the first end of the second MOS transistor are coupled through a resistor, and a second end of the first MOS transistor and a third end of the first MOS transistor are respectively coupled to the control module. The control module is configured to determine whether an electrical signal on a path where the second MOS transistor is located is abnormal based on a voltage drop across a second end of the second MOS transistor and the third end of the second MOS transistor during discharging, and control the second MOS transistor to be turned off when the electrical signal on the path where the second MOS transistor is located is abnormal.

In an embodiment, the discharging protection sub-module includes a discharging detection component and a discharging switch coupled in series on the path where the discharging protection sub-module is located, and both ends of the discharging detection component and a control end of the discharging switch are coupled to the control module. The control module is configured to determine whether an electrical signal on a path where the discharging detection component is located is abnormal based on a voltage drop across both ends of the discharging detection component during discharging, and control the discharging switch to be turned off when the electrical signal on the path where the discharging detection component is located is abnormal.

In an embodiment, the discharging detection component is a MOS transistor or a second resistor.

In an embodiment, two electrodes of each cell unit are coupled to the control module, and when the control module detects an abnormal voltage drop across the cell unit, the protection module is controlled to be turned off.

In an embodiment, the cell unit includes at least one cell.

In an embodiment, the cell protection circuit includes dual-stage cell units, protection modules are coupled on a path between a positive electrode of the first-stage cell unit and the output interface and on a path between a negative electrode of the first-stage cell unit and the output interface respectively.

In an embodiment, the cell protection circuit includes dual-stage cell units, protection modules are coupled on a path between a negative electrode of a first-stage cell unit and the output interface and on a path between a negative electrode of a second-stage cell unit and the output interface respectively.

In an embodiment, the cell protection circuit includes dual-stage cell units, protection modules are coupled on a path between a positive electrode of a first-stage cell unit and the output interface and on a path between a negative electrode of a second-stage cell unit and the output interface respectively.

In an embodiment, the protection module includes a MOS transistor for charging protection of a path where the protection module is located and a MOS transistor for discharging protection of the path where the protection module is located.

In a second aspect, the present disclosure provides an electronic device including the cell protection circuit according to embodiments of the first aspect.

### BRIEF DESCRIPTION OF THE DRAWINGS

One or more embodiments of the present disclosure are exemplarily described by corresponding drawings. These exemplary descriptions and drawings are not construed to limit the present disclosure. The same or similar elements and the elements having same or similar functions are denoted by like reference numerals throughout the descriptions. The drawings do not constitute a scale limitation, and in which:
FIG. 1 is a schematic diagram of a protection circuit of cells coupled in series in the related art.
FIG. 2 is a schematic diagram of a cell protection circuit according to an embodiment of the present disclosure.
FIG. 3A is a schematic diagram of a charging protection sub-module according to an embodiment of the present disclosure.
FIG. 3B is another schematic diagram of a charging protection sub-module according to an embodiment of the present disclosure.
FIGS. 4A-4D are schematic diagrams of a partial structure of a cell protection circuit according to an embodiment of the present disclosure.
FIG. 5 is a schematic diagram of a protection module according to an embodiment of the present disclosure.
FIGS. 6A-6E are structural diagrams of a partial structure of a cell protection circuit according to an embodiment of the present disclosure.
FIG. 7 is another schematic diagram of a cell protection circuit according to an embodiment of the present disclosure.
FIG. 8 is a schematic diagram of a cell protection circuit according to an embodiment of the present disclosure.
FIG. 9 is another schematic diagram of a cell protection circuit according to an embodiment of the present disclosure.
FIG. 10 is another schematic diagram of a cell protection circuit according to an embodiment of the present disclosure.
FIGS. 11A-B are schematic diagrams of a charging scenario of an electronic device according to an embodiment of the present disclosure.
FIG. 12 is a schematic diagram of an internal structure of an electronic device according to an embodiment of the present disclosure.

### DETAILED DESCRIPTION

The terms used in the embodiments of the present disclosure are only used to explain specific examples of the present disclosure, and are not intended to limit the present disclosure.

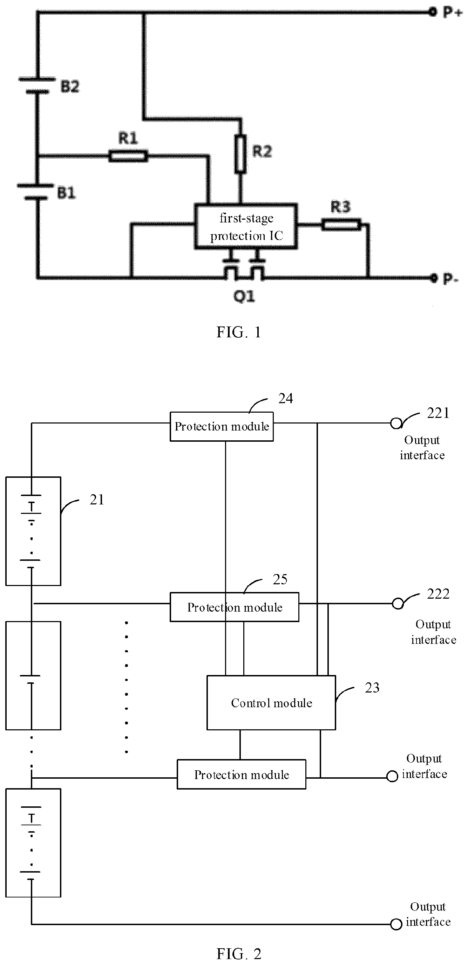

Currently, electronic devices such as mobile phones usually supply power to the components in the electronic device through two cells coupled in series. Meanwhile, in order to improve the security of power supply and prevent overcurrent, short circuit, over-charging and over-discharging from damaging the cells, the protection of the cells is designed in the related art. However, since the existing cells coupled in series only have two output interfaces, the existing cell protection circuit is only applicable for the case of two output interfaces. For example, FIG. 1 is a schematic diagram of a protection circuit of cells coupled in series in the related art. In FIG. 1, an electronic device includes two cells B1 and B2, two output interfaces P+ and P-, and a first-stage protection chip (referred to as first-stage protection IC). The cell B1 and the cell B2 are coupled in series, the output interface P+ is coupled to a positive electrode of the cell B2, and the output interface P- is coupled to a negative electrode of the cell B 1 through a MOS transistor Q1. The MOS transistor Q1 includes a charging MOS and a discharging MOS, and an end of the MOS transistor Q1 that is close to the cell B1 is directly coupled to the first-stage protection IC, and an end of the MOS transistor Q1 near the output interface P- is coupled to the first-stage protection IC through a resistor R3. The first-stage protection IC determines whether a path between the output interfaces P+ and P- experiences an overcurrent situation or is short-circuited based on a voltage drop across the MOS transistor Q1. When it is determined that the path between the output interfaces P+ and P- experiences the overcurrent situation or is short-circuited during charging, the charging MOS is turned off, when it is determined that the path between the output interfaces P+ and P- experiences the overcurrent situation or is short-circuited during discharging, the discharging MOS is turned off, so as to protect the cells B1 and B2. In addition, the first-stage protection IC may be coupled to a path between the cell B1 and the cell B2 through a resistor R1, and coupled to a path between the output interface P+ and the cell B2 through a resistor R2. The first-stage protection IC can collect a voltage drop across the cell B1 through a path where R1 is located and a path between an end of the MOS transistor Q1 near the cell B1 and the first-stage protection IC, and collect a voltage drop across the cell B2 through the path where R1 is located and a path where R2 is located, and determine whether a circuit between the output interface P+ and the output interface P- is over-charged or over-discharged according to the voltage drops across B1 and B2. If it is detected that the voltage drop across any of B1 and B2 is less than a preset over-discharge threshold, the discharging MOS is controlled to be turned off to prevent over-discharging of B1 and B2. If it is detected that the voltage drop across any of B1 and B2 is greater than a preset over-charge threshold, the charging MOS is controlled to be turned off, to prevent over-charging of B1 and B2.

However, the actual situation is that there are many types of components in the electronic device, and the power supply requirements of different components are different. On the basis of the existing two output interfaces, various conversion modules must be added to the electronic device, so that electrical signals obtained from the conversion modules can meet the power supply requirements of different components. The setup of the conversion modules not only increase the cost of the electronic device, but also take up physical space which originally is not so much in the electronic device.

In addition, since the electronic device has only two output interfaces, and the two output interfaces are respectively located at the two electrodes of a serial cell pack. Therefore, in the scenario of charging or discharging, only the two output interfaces can be used to discharge or charge all the cells in the cell pack at the same time, instead of charging or discharging a certain cell or a plurality of cells coupled in series accurately. However, in actual situations, not every cell needs to be charged or discharged, and charging or discharging all the cells in any scene results in energy waste and low charging and discharging efficiency.

In view of the above problems, embodiments of the present disclosure provide a cell protection circuit. The cell protection circuit includes two or more cell units and three or more output interfaces. Based on the design, the embodiments of the present disclosure can use different output interfaces to supply power to components with different power requirements, thereby reducing the number of conversion modules in the electronic device, reducing the cost of the electronic device, and saving the physical space of the electronic device. During charging, in the embodiments of the present disclosure, an output interface coupled to both ends of a cell unit with low electric quantity may be selected to charge the cell unit, while during discharging, a cell unit with high electric quantity may be selected for discharging, thereby improving the charging and discharging efficiency. In addition, in order to realize the protection of cell based on a multi-port design, the embodiments of the present disclosure also redesign the cell protection circuit to prevent signal abnormalities such as overcurrent and short circuit from damaging the cell.

For example, FIG. 2 is a schematic diagram of a cell protection circuit according to an embodiment of the present disclosure. As illustrated in FIG. 2, a cell protection circuit including a control module, multistage cell units coupled in series and N output interfaces is provided, N is an integer greater than or equal to 3. In this embodiment, each cell unit includes at least one cell. When the cell unit includes a plurality of cells, the plurality of cells are coupled in series. In this embodiment, a positive electrode of a first-stage cell unit and a negative electrode of a last-stage cell unit in the multistage cell units are each coupled to an output interface, and a negative electrode of each upper-stage cell unit and a positive electrode of an adjacent lower-stage cell unit are coupled to a same output interface, such that the design of three or more output interfaces is realized. It should be noted here that FIG. 2 shows a case where the negative electrode of each upper-stage cell unit and the positive electrode of the adjacent lower-stage cell unit are coupled to the same output interface through a same path, but this disclosure is not limited to this connection method. In fact, in the multistage cell units in this embodiment, the negative electrode of each upper-stage cell unit and the positive electrode of the adjacent lower-stage cell unit can also be coupled to the same output interface through different paths.

In addition, in order to achieve protection for each cell unit, a protection module is coupled between at least one output interface of the N output interfaces involved in this embodiment and a cell unit coupled to the at least one output interface. The protection module in this embodiment has a switching function, through which the protection module can disconnect the path where it is located, and structures of different protection modules on different circuits in this embodiment may be the same or different. Taking the first-stage cell unit 21 in FIG. 2 as an example, since an output interface 221 and an output interface 222 are output interfaces coupled to the first-stage cell unit 21, when the first-stage cell unit 21 is charged or discharged, the output interface 221 and the output interface 222 are selected. In this case, a control module 23 detects electrical signals on a path from the output interface 221 to the output interface 222 through a protection module 24, the first-stage cell unit 21, and a protection module 25. When an abnormal situation such as overcurrent or short circuit occurs in the electrical signal on the path, the control module 23 controls at least one of the protection module 24 and the protection module 25 to be turned off to prevent the first-stage cell unit 21 from being damaged. Certainly, the example is for illustration only and is not considered as limitation for this disclosure. In fact, other cell units in this embodiment can also adopt a protection method similar to the above example, which is not repeated in this embodiment for the sake of simplicity.

For example, in an implementation, the protection module in this embodiment may include a charging protection sub-module, and a control end of the charging protection sub-module is coupled to the control module. The control module is configured to perform charging protection on the cell unit on a path where the charging protection sub-module is located, to prevent the cell from being damaged due to overcurrent or short circuit during charging. When the electrical signal (such as current and voltage) on the path where the charging protection sub-module is located is abnormal, the control module performs charging protection on the cell by controlling the charging protection sub-module to be turned off.

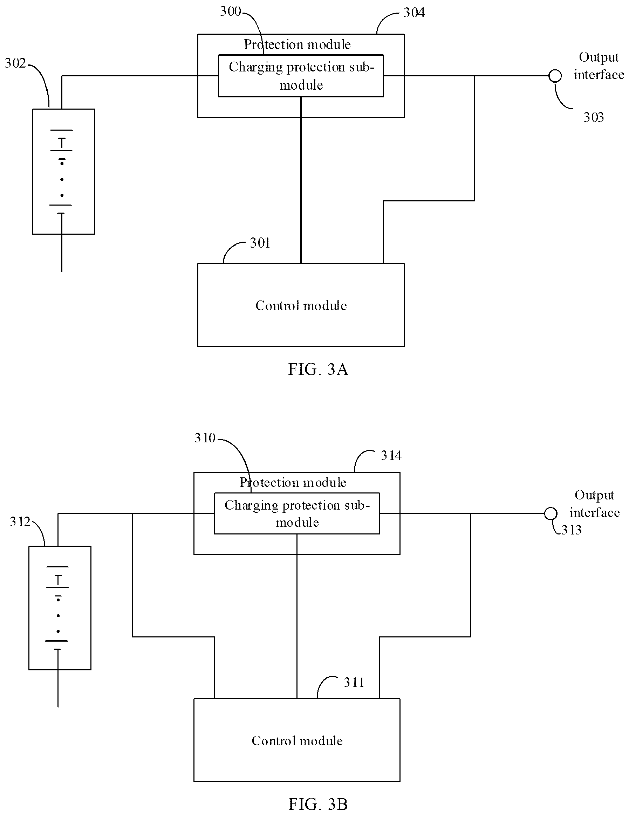

For example, FIG. 3A is a schematic diagram of a charging protection sub-module according to an embodiment of the present disclosure. FIG. 3B is another schematic diagram of a charging protection sub-module according to an embodiment of the present disclosure. In FIG. 3A, a protection module 304 includes a charging protection sub-module 300. A control end of the charging protection sub-module 300 is coupled to the control module 301, two ends other than the control end of the charging protection sub-module 300 are respectively coupled to a cell unit 302 and an output interface 303. The control module 301 is coupled to wires on a path where the charging protection sub-module 300 is located, and is configured to obtain current on the path where the charging protection sub-module 300 is located. When an abnormal situation occurs, that is, the current exceeds a preset charging overcurrent threshold or a preset charging short-circuit threshold, the charging protection sub-module 300 is controlled to be turned off, so that the cell unit 302 coupled to the charging protection sub-module 300 stops being charged to prevent the cell unit from being burned out. In FIG. 3B, a protection module 314 includes a charging protection sub-module 310, a control end of the charging protection sub-module 310 is coupled to a control module 311, an end of the charging protection sub-module 310 coupled to a cell unit 312 and an end of the charging protection sub-module 310 coupled to an output interface 313 are respectively coupled to the control module 311. The control module 311 collects a voltage drop across both ends of the charging protection sub-module 310 and compares this voltage drop with the preset charging overcurrent voltage threshold or the preset charging short-circuit voltage threshold. If the voltage drop across both ends of the charging protection sub-module 310 is greater than the preset charging overcurrent voltage threshold or the preset charging short-circuit voltage threshold, the charging protection sub-module 310 is controlled to be turned off, so that the cell unit 312 coupled to the charging protection sub-module 310 stops being charged, to prevent the cell unit 312 from being burned out.

The structures of different charging protection sub-modules on different paths may be the same or different. In order to facilitate understanding of this embodiment, the following structures of the charging protection sub-module are provided as examples.

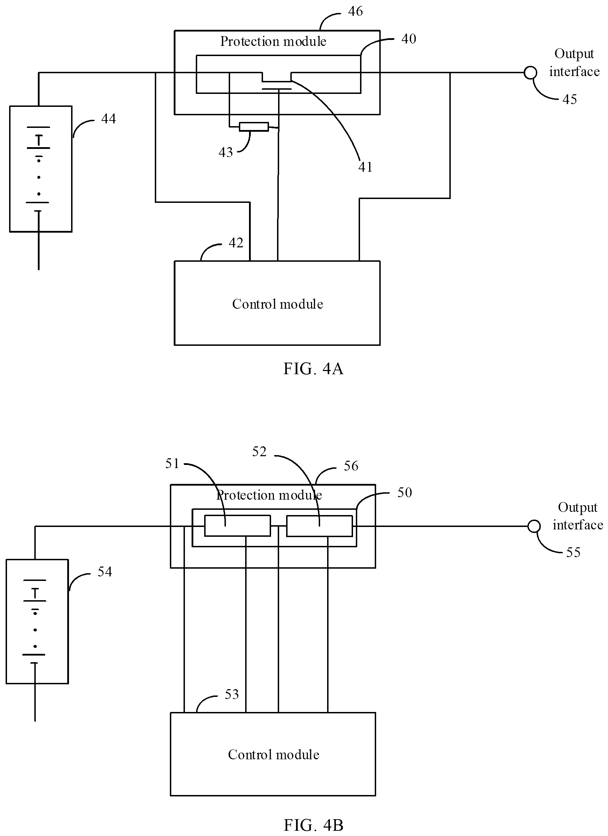

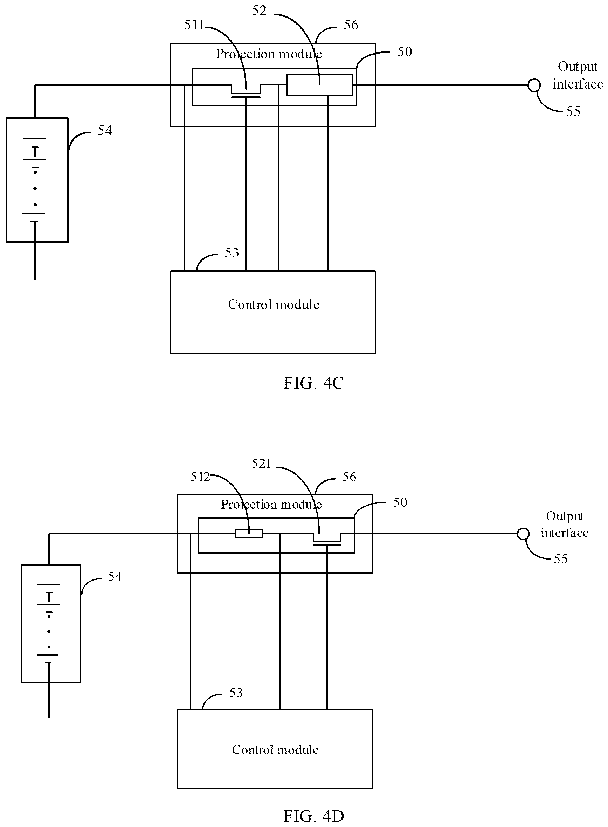

FIG. 4A is a schematic diagram of a cell protection circuit according to an embodiment of the present disclosure. As illustrated in FIG. 4A, a protection module 46 includes a charging protection sub-module 40, and the charging protection sub-module 40 includes a MOS transistor 41 (hereinafter referred to as first MOS transistor for convenience of distinguishing). A first end of the first MOS transistor 41 (which can be exemplarily understood as a gate of the MOS transistor) is coupled to a control module 42, and a second end of the first MOS transistor 41 (which can be exemplarily understood as a source) and the first end of the MOS transistor 41 are coupled through a resistor 43. The second end of the first MOS transistor 41 and a third end of the first MOS transistor 41 (which may be exemplarily understood as a drain) are coupled to the control module 42, respectively. The second end of the first MOS transistor 41 is also coupled to a cell unit 44 on a path where the charging protection sub-module 40 is located, and the third end of the first MOS transistor 41 is also coupled to an output interface 45 on the path where the charging protection sub-module 40 is located. The control module 42 is configured to determine whether an electrical signal on a path where the first MOS transistor 41 is located is abnormal based on a voltage drop across the second end and the third end of the first MOS transistor 41 during charging, and control the first MOS transistor to be turned off when the electrical signal on the path where the first MOS transistor 41 is located is abnormal. The second end and the cell unit are not limited to be directly coupled through wires. In other ways, a resistor is also coupled in series between the second end and the cell unit.

FIG. 4B is a schematic diagram of a partial structure of a cell protection circuit according to an embodiment of the present disclosure. As illustrated in FIG. 4B, a protection module 56 includes a charging protection sub-module 50, and the charging protection sub-module 50 includes a charging detection component 51 and a charging switch 52 coupled in series on a path where the charging protection sub-module 50 is located. Both ends of the charging detection component 51 and a control end of the charging switch 52 are coupled to a control module 53. The control module 53 determines whether an electrical signal on a path where the charging detection component is located is abnormal based on a voltage drop across both ends of the charging detection component 51. When the electrical signal on the path where the charging detection component 51 is located is abnormal, the control module 53 controls the charging switch 52 to be turned off to prevent an output interface 55 from charging the cell unit 54. FIGS. 4C-4D are schematic diagrams of a partial structure of a cell protection circuit according to an embodiment of the present disclosure. As illustrated in FIGS. 4C-4D, the charging detection component 51 in FIG. 4B may be a MOS transistor 511 or a resistor 512 (for convenience of distinguishing, hereinafter referred to as first resistor). When the charging detection component is, for example, the first resistor 512, the charging switch in this embodiment may be a MOS transistor 521 (for convenience of distinguishing, hereinafter referred to as third MOS transistor), and a gate of the third MOS transistor 521 is coupled to the control module 53. The control module 53 is configured to control the third MOS transistor 521 to be turned off when an electrical signal on a path where the first resistor 512 is located is abnormal during charging of the cell unit 54 on the path where the first resistor 512 is located. When the charging detection component is a MOS transistor, the MOS transistor may also be the charging switch in this embodiment. In other words, when the charging detection component is a MOS transistor, the charging detection component and the charging switch can be the same. In this case, a control end of the charging detection component (i.e., the gate of the MOS transistor) is coupled to the control module. The two ends of the charging detection component coupled in series on the path where the charging protection sub-module is located are coupled to the control module. In this case, the control module is configured to determine whether the path where the charging protection sub-module is located experiences an overcurrent situation or is short-circuited based on a voltage drop across both ends of the charging detection component, and control the charging detection component to be turned off if the path where the charging protection sub-module is located experiences an overcurrent situation or is short-circuited.

Or in other embodiments, when the charging detection component is a MOS transistor, the charging switch may be another MOS transistor different from the charging detection component. In this case, the connection between the charging detection component and the charging switch is similar to the connection when the charging detection component is the first resistor, which is not repeated herein.

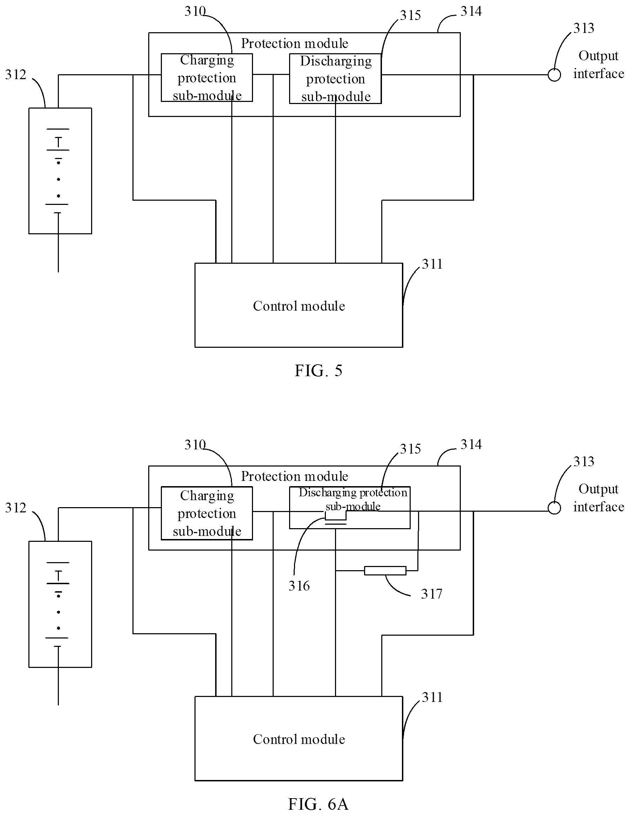

For example, FIG. 5 is another schematic diagram of a protection module according to an embodiment of the present disclosure. As illustrated in FIG. 5, based on the structure of FIG. 3B, the protection module 314 may further include a discharging protection sub-module 315 coupled in series on the path where the protection module is located. The discharging protection sub-module 315 is coupled to a control module 311. The discharging protection sub-module 315 is configured to perform discharging protection on a cell unit 312 on a path where the discharging protection sub-module 315 is located to protect the cell unit from being damaged due to overcurrent or short circuit during discharging. When the control module detects that the electrical signal on the path where the discharging protection sub-module 315 is located is abnormal, the control module controls the discharging protection sub-module 315 to be turned off. In this embodiment, the discharging protection sub-module is coupled in series with the charging protection sub-module, an end of the charging protection sub-module coupled to the serial cells and a control end of the charging protection sub-module are respectively coupled to the control module, and a control end of the discharging protection sub-module and two ends of the discharging protection sub-modules coupled in series in a circuit where the protection module is located are respectively coupled to the control module. The control module is configured to control the discharging protection sub-module in the circuit to be turned off when the electrical signal in the circuit where the discharging protection sub-module is located is abnormal during discharging of the cell unit.

FIGS. 6A is a structural diagram of a partial structure of a cell protection circuit according to an embodiment of the present disclosure. As illustrated in FIG. 6A, based on the embodiment of FIG. 5, the discharging protection sub-module 315 may include a second MOS transistor 316, and a first end of the second MOS transistor 316 (which may be exemplarily understood as a gate of the second MOS transistor) is coupled to the control module 311. A third end of the second MOS transistor 316 (which may be exemplarily understood as a drain of the second MOS transistor) and a first end of the second MOS transistor are coupled through a resistor 317, and a second end of the first MOS transistor (which may be exemplarily understood as a source of the second MOS transistor) and a third end of the first MOS transistor are respectively coupled to the control module 311. The third end of the second MOS transistor is coupled to the output interface 313 on the path where the second MOS transistor is located, and the second end of the second MOS transistor is coupled to the cell unit 312 on the path where the second MOS transistor is located. The control module 311 is configured to determine whether an electrical signal on the path where the second MOS transistor is located is abnormal based on a voltage drop across the second end and the third end of the second MOS transistor during discharging, and control the second MOS transistor to be turned off when the electrical signal on the path where the second MOS transistor is located is abnormal.

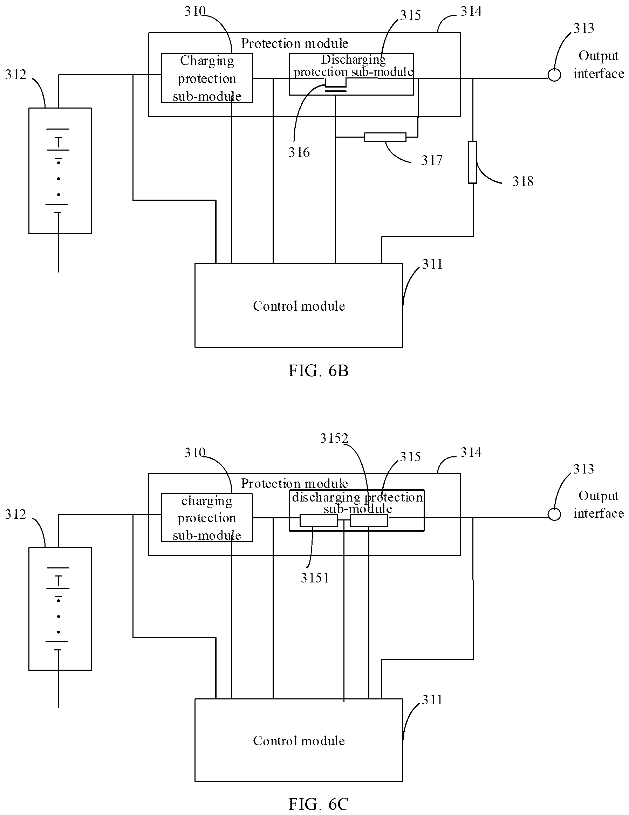

FIG. 6B is a structural diagram of a partial structure of a cell protection circuit according to an embodiment of the present disclosure. As illustrated in FIG. 6B, based on the embodiment of FIG. 6B, a resistor 318 is coupled in series between the third end of the second MOS transistor and the control module.

FIG. 6C is a structural diagram of a partial structure of a cell protection circuit according to an embodiment of the present disclosure. As illustrated in FIG. 6C, based on the embodiment of FIG. 5, the discharging protection sub-module 315 includes: a discharging detection component 3151 and a discharging switch 3152 coupled in series on a path where the discharging protection sub-module is located, and both ends of the discharging detection component 3151 and a control end of the discharging switch 3152 are coupled to the control module. The control module is configured to determine whether an electrical signal on the path where the discharging detection component is located is abnormal based on a voltage drop across both ends of the discharging detection component during discharging, and control the discharging switch to be turned off when the electrical signal on the path where the discharging detection component is located is abnormal.

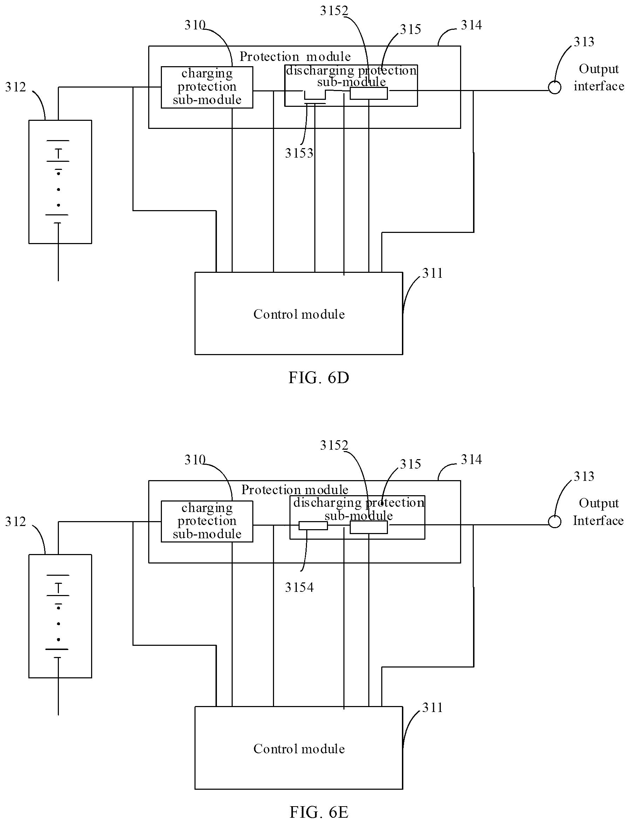

FIG. 6D is a structural diagram of a partial structure of a cell protection circuit according to an embodiment of the present disclosure. As illustrated in FIG. 6D, based on FIG. 6C, the discharging detection component is a MOS transistor 3153.

FIG. 6E is a structural diagram of a partial structure of a cell protection circuit according to an embodiment of the present disclosure. As illustrated in FIG. 6E, based on FIG. 6C, the discharging detection component is a second resistor 3154.

Certainly, the above is only an illustration and cannot be considered to be limitation on the present disclosure. In fact, in this embodiment, the structure of the discharging protection sub-module in the embodiment of FIG. 5 and the connection of the discharging protection sub-module in the cell protection circuit are similar to the charging protection sub-module provided above. Regarding the connection relation of components included in the discharging protection sub-module, reference can be made to the related content of the aforementioned charging protection sub-module, which is not repeated herein.

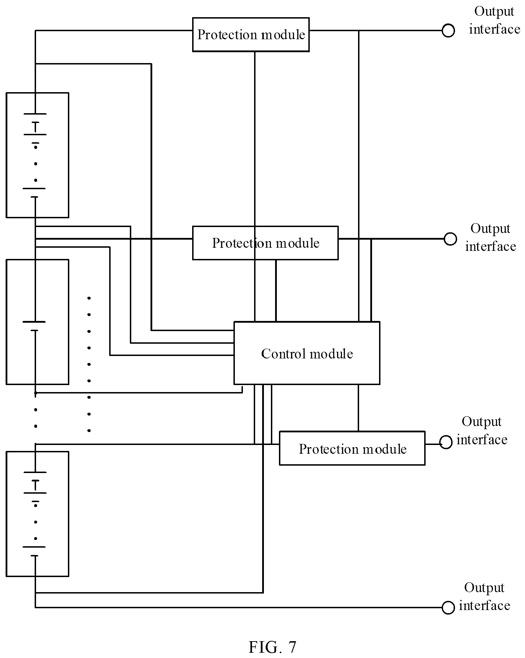

In another implementation of this embodiment, the cell protection circuit may further detect over-discharging and over-charging of the cell. For example, FIG. 7 is another schematic diagram of a cell protection circuit according to an embodiment of the present disclosure. As illustrated in FIG. 7, based on FIG. 7, two electrodes of each cell unit are coupled to the control module. The control module collects a voltage drop across the cell unit. When it is detected that the voltage drop across a cell unit exceeds the preset over-charge voltage threshold or falls below the preset over-discharge voltage threshold, the control module controls the protection module coupled to the cell unit to be turned off to achieve over-charging or over-discharging protection of the cell unit.

In the cell protection circuit provided in this embodiment, since the positive electrode of the first-stage cell unit and the negative electrode of the last-stage cell unit in the multistage cell units coupled in series are each coupled to an output interface, and a negative electrode of each upper-stage cell unit and a positive electrode of an adjacent lower-stage cell unit are coupled to the same output interface, thus three or more output interfaces are provided. Compared with the design of two interfaces in the conventional cell protection circuit, the cell protection circuit provided in this embodiment can better meet the requirements of different components for electric energy. Meanwhile, during the charging and discharging operations, the output interface can also be selected to achieve accurate charging and discharging operations on a certain cell unit or a plurality of serial cell units, which improves the charging and discharging efficiency. In addition, in the embodiments of the present disclosure, the connection structure of at least one output interface is designed to have the protection module coupled between the cell unit and the output interface, and the charging and discharging protection of the cell unit can be realized by the protection module, such that the use safety of the cell unit is provided, thereby facilitating extending the service life of the cell unit.

The embodiments of the present invention further provide a cell protection circuit. Based on any of the above embodiments, the output interfaces coupled to the protection module include output interfaces other than the output interface coupled to the negative electrode of the last-stage cell unit in the N output interfaces.

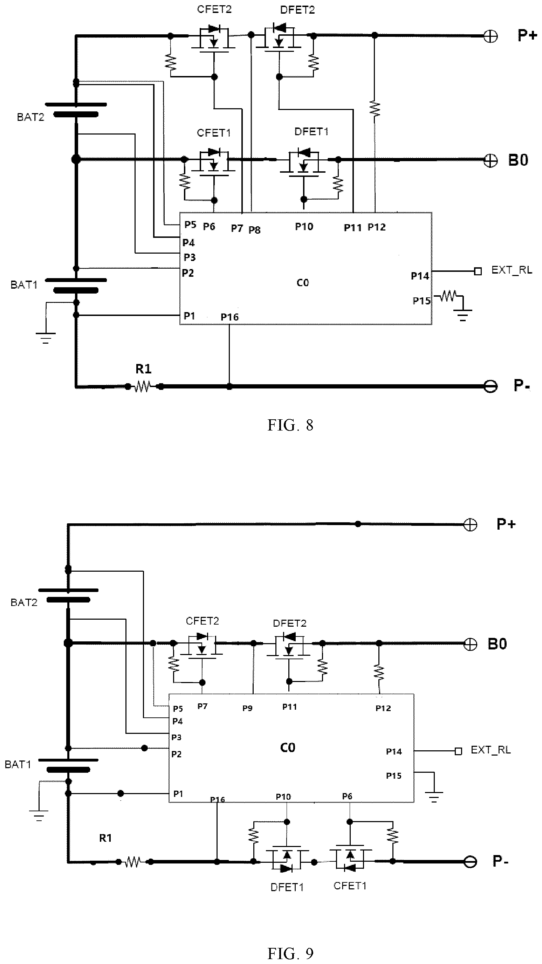

For example, FIG. 8 is a schematic diagram of a cell protection circuit according to an embodiment of the present disclosure. As illustrated in FIG. 8, the cell protection circuit includes a cell unit BAT 1 and a cell unit BAT2, and a port P+, a port B0, a port P-. A negative electrode of the cell unit BAT1 is grounded, the port P+ is coupled to a positive electrode of the cell unit BAT2. A positive electrode of the cell unit BAT1 and a negative electrode of the cell unit BAT2 are coupled to the port B0 through a path, and the negative electrode of the cell unit BAT1 is coupled to the port P-. On a path between the P+ and the positive electrode of the cell unit BAT2, the protection devices are configured as a charging MOS CFET2 and a discharging MOS DFET2 coupled in series on the path. A gate of the charging MOS CFET2 is coupled to a pin P7 of a control chip C0 (i.e., the control module described in the previous embodiment), an end of the charging MOS CFET2 coupled to the cell unit BAT2 is coupled to the gate of the charging MOS CFET2 through a resistor, and is coupled to a pin P5 of the control chip C0 through a wire. An end of the charging MOS CFET2 coupled to the discharging MOS DFET2 is coupled to a pin P8 of the control chip C0 through a wire, a gate of the discharging MOS DFET2 is coupled to a pin P11 of the control chip C0, and an end of the discharging MOS DFET2 coupled to the P+ is coupled to the gate through a resistor, and is coupled to a pin P12 of the control chip C0 through another path having a resistor. The protection devices on the circuit between the port B0 and the port P- are embodied as the resistor R1, the charging MOS CFET1, and the discharging MOS DFET1 coupled in series on the circuit. The gate of the charging MOS CFET1 is coupled to a pin P6 of the control chip C0, and an end of the charging MOS CFET1 coupled to the cell unit BAT2 or the cell unit BAT1 is coupled to the gate of the charging MOS CFET1 through the resistor, the gate of the discharging MOS DFET2 is coupled to a pin P10 of the control chip C0, and an end of the discharging MOS DFET2 coupled to the port B0 is coupled to the gate through the resistor. The resistor R1 is coupled in series on the path between P- and the negative electrode of BAT1. One end of the resistor R1 near the negative electrode of BAT1 is coupled to the pin P1 of the control chip C0 and the other end is coupled to a pin P16 of the control chip C0. A pin P15 of the control chip C0 is grounded, and a pin P14 is coupled to an EXT_RL port. The positive electrode of BAT2 is coupled to a pin P4 of the control chip C0, the negative electrode of BAT2 is coupled to a pin P3 of the control chip C0, and the positive electrode of BAT 1 is coupled to a pin P2 of the control chip C0.

P+ and B0 are used when charging or discharging BAT2. When BAT2 is charged, the control chip C0 detects a voltage drop across CFET2. When the voltage drop across CFET2 exceeds a preset charging overcurrent threshold or the preset charging short-circuit threshold, the control chip C0 controls CFET2 and/or CFET1 to be turned off, thereby achieving charging protection of BAT2. When BAT2 is discharged, the control chip C0 detects the voltage drop across DFET2. When the voltage drop across DFET2 exceeds the preset discharging overcurrent threshold or the preset discharging short-circuit threshold, the control chip C0 controls DFET2 and/or DFET1 to be turned off, thereby achieving discharging protection of BAT2. Or when BAT2 is charged or discharged, the control chip C0 can also determine whether BAT2 is over-discharged or over-charged according to the voltage drop across BAT2. If BAT2 is over-charged, CFET2 and/or CFET1 are turned off, also if BAT2 is over-discharged, DFET2 and/or DFET1 are turned off.

P- and B0 are used when charging or discharging BAT1. When BAT1 is charged, the control chip C0 detects a voltage drop across R1. When the voltage drop across R1 exceeds the preset charging overcurrent threshold or the preset charging short-circuit threshold, the control chip C0 controls CFET1 to be turned off, thereby implementing charging protection for BAT 1. When BAT1 is discharged, the control chip C0 detects a voltage drop across R1. When the voltage drop across R1 exceeds the preset discharging overcurrent threshold or the preset discharging short-circuit threshold, the control chip C0 controls DFET1 to be turned off, thereby achieving discharging protection for BAT1. Or when BAT1 is charged or discharged, the control chip C0 can also determine whether BAT1 is over-discharged or over-charged according to the voltage drop across BAT1. If BAT1 is over-charged, then CFET1 is turned off. If BAT1 is over-discharged, then DFET1 is turned off.

When charging or discharging BAT1 and BAT2 at the same time, P- and P + are used. During charging, the control chip C0 detects the voltage drop across CFET2. When the voltage drop across CFET2 exceeds the preset charging overcurrent threshold or the preset charging short-circuit threshold, the control chip C0 controls the CFET2 to be turned off, thereby realizing charging protection for BAT1 and BAT2. During discharging, the control chip C0 detects the voltage drop across DFET2. When the voltage drop across DFET2 exceeds the preset discharging overcurrent threshold or the preset discharging short-circuit threshold, the control chip C0 controls DFET2 to be turned off to achieve discharging protection for BAT2 and BAT 1. Or when BAT2 and BAT1 are charged or discharged, the control chip C0 can also determine whether BAT2 or BAT1 is over-discharged or over-charged according to the voltage drops across BAT2 and BAT1 respectively. If over-charging occurs, CFET2 is turned off, and if over-discharging occurs, DFET2 is turned off.

In the structure illustrated in FIG. 8, since CFET2 and DFET2 are set on the path where P+ is located, CFET1 and DFET1 are set on the path where B0 is located, and there is no MOS transistor on the path where P- is located, when BAT1 is charged or discharged or BAT2 and BAT1 are charged or discharged, the current only needs to flow through CFET2 and DFET2 or flow through CFET1 and DFET1 without flowing through a plurality of CFETs or DFETs, thereby reducing energy consumed by the MOS transistor and saving energy.

An embodiment of the present disclosure further provides a cell protection circuit. In this circuit, output interfaces coupled to the protection module include output interfaces other than the output interface coupled to the positive electrode of the first-stage cell unit in the N output interfaces.

For example, FIG. 9 is another schematic diagram of a cell protection circuit according to an embodiment of the present disclosure. As illustrated in FIG. 9, the cell protection circuit includes a cell unit BAT1 and a cell unit BAT2, a port P+, a port B0, and a port P-. A negative electrode of the cell unit BAT1 is grounded, the port P+ is coupled to a positive electrode of the cell unit BAT2, a positive electrode of the cell unit BAT1 and a negative electrode of the cell unit BAT2 are coupled to the port B0 through a path. A negative electrode of the cell unit BAT1 is coupled to the port P-, on the path between B0 and P+, the protection devices are embodied as a charging MOS CFET2 and a discharging MOS DFET2 coupled in series on the path. A gate of the charging MOS CFET2 is coupled to a pin P7 of a control chip C0 (i.e., the control module described in the previous embodiment), an end of the charging MOS CFET2 coupled to the cell unit BAT2 is coupled to the gate of the charging MOS CFET2 through a resistor, and is coupled to a pin P5 of the control chip C0 through a wire. An end of the charging MOS CFET2 coupled to the discharging MOS DFET2 is coupled to a pin P9 of the control chip C0 through a wire, a gate of the discharging MOS DFET2 is coupled to a pin P11 of the control chip C0, and an end of the discharging MOS DFET2 coupled to B0 is coupled to the gate of the discharging MOS DFET2 through a resistor, and is coupled to a pin P12 of the control chip C0 through another path having a resistor. The protection devices on the path between the port P+ and the port P- are embodied as the resistor R1, the charging MOS CFET1, and the discharging MOS DFET1 coupled in series on the path. A gate of the charging MOS CFET1 is coupled to a pin P6 of the control chip C0, and an end of the charging MOS CFET 1 coupled to the port P- is coupled to the gate of the charging MOS CFET1 through a resistor. A gate of the discharging MOS DFET1 is coupled to a pin P10 of the control chip C0, and an end of the discharging MOS DFET 1 coupled to the resistor R1 is coupled to the gate of the discharging MOS DFET1 through another resistor. An end of the resistor R1 (R1 is coupled in series on the path where P- is located) coupled to the negative electrode of BAT 1 is coupled to a pin P1 of the control chip C0 and the other end of the resistor R1 is coupled to a pin P16 of the control chip C0. A pin P15 of the control chip C0 is grounded, and a pin P14 is coupled to an EXT_RL port. The positive electrode of BAT2 is coupled to a pin P4 of the control chip C0, the negative electrode of BAT2 is coupled to a pin P3 of the control chip C0, and the positive electrode of BAT1 is coupled to a pin P2 of the control chip C0.

P + and B0 are used when charging or discharging BAT2. When BAT2 is charged, the control chip C0 detects a voltage drop across CFET2. When the voltage drop across CFET2 exceeds the preset charging overcurrent threshold or the preset charging short-circuit threshold, the control chip C0 controls CFET2 to be turned off, thereby achieving charging protection for BAT2. When BAT2 is discharged, the control chip C0 detects a voltage drop across DFET2. When the voltage drop across DFET2 exceeds the preset discharging overcurrent threshold or the preset discharging short-circuit threshold, the control chip C0 controls DFET2 to be turned off, thereby achieving discharging protection for BAT2. Or when BAT2 is charged or discharged, the control chip C0 can also determine whether BAT2 is over-discharged or over-charged according to the voltage drop across BAT2. If BAT2 is over-charged, CFET 2 is turned off, and if BAT2 is over-discharged, DFET2 is turned off.

P- and B0 are used when charging or discharging BAT1. When BAT1 is charged, the control chip C0 detects a voltage drop across R1. When the voltage drop across R1 exceeds the preset charging overcurrent threshold or the preset charging short-circuit threshold, the control chip C0 controls CFET1 and/or CFET2 to be turned off, thereby realizing charging protection for BAT1. When BAT1 is discharged, the control chip C0 detects the voltage drop across R1. When the voltage drop across R1 exceeds the preset discharging overcurrent threshold or the preset discharging short-circuit threshold, the control chip C0 controls DFET1 and/or DFET2 to be turned off, thereby achieving discharging protection of BAT1. Or when BAT1 is charged or discharged, the control chip C0 can also determine whether BAT1 is over-discharged or over-charged according to the voltage drop across BAT1. If BAT1 is over-charged, then CFET1 and/or CFET2 are turned off. If BAT1 is over-discharged, then DFET1 and/or DFET2 are turned off.

When charging or discharging BAT1 and BAT2 at the same time, P- and P + are used. During charging, the control chip C0 detects the voltage drop across R1. When the voltage drop across R1 exceeds the preset charging overcurrent threshold or the preset charging short-circuit threshold, the control chip C0 controls the CFET1 to be turned off, thereby realizing charging protection for BAT2 and BAT2. During discharging, the control chip C0 detects the voltage drop across R1. When the voltage drop across R1 exceeds the preset discharging overcurrent threshold or the preset discharging short-circuit threshold, the control chip C0 controls DFET1 to be turned off, thereby achieving discharging protection for BAT2 and BAT1. Or when BAT2 and BAT1 are charged or discharged, the control chip C0 can also determine whether BAT2 or BAT1 is over-discharged or over-charged according to the voltage drop across BAT2 and the voltage drop across BAT1 respectively. If over-charging occurs, CFET1 is turned off. If over-discharging occurs, DFET1 is turned off.

In the structure illustrated in FIG. 9, since CFET2 and DFET2 are set on the path where B0 is located, CFET1 and DFET1 are set on the path where P- is located, and there is no MOS transistor on the path where P+ is located, when BAT2 is charged or discharged or BAT2 and BAT1 are charged or discharged, the current only needs to flow through CFET2 and DFET2 or flow through CFET1 and DFET1 without flowing through a plurality of CFETs or DFETs, thereby reducing energy consumed by the MOS transistor and saving energy.

An embodiment of the present disclosure further provides a cell protection circuit. In the cell protection circuit, the output interfaces connected to the protection module at least include the output interface coupled to the positive electrode of the first-stage cell unit and the output interface coupled to the negative electrode of the last-stage cell unit.

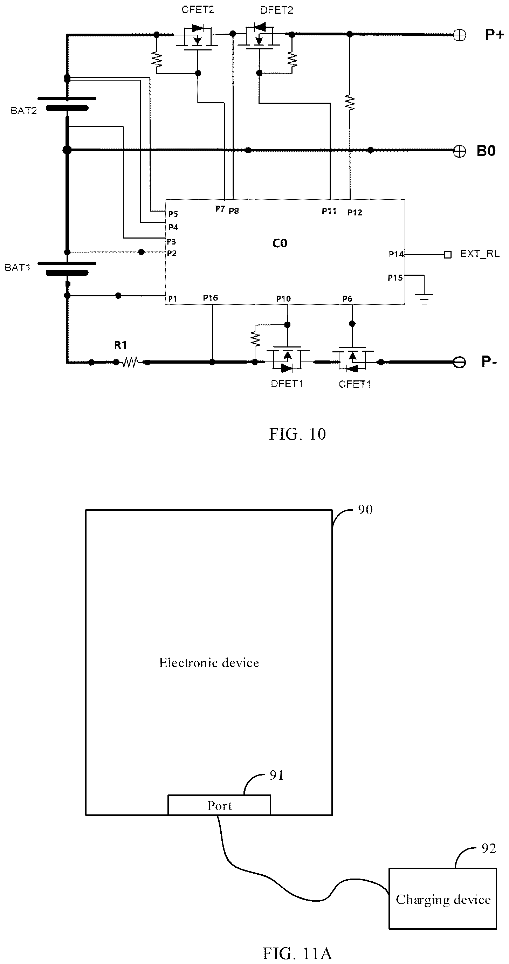

For example, FIG. 10 is another schematic diagram of a cell protection circuit according to one example implementation. As illustrated in FIG. 10, the cell protection circuit includes a cell unit BAT1 and a cell unit BAT2, a port P+, a port B0, and a port P-. The port P+ is coupled to a positive electrode of the cell unit BAT2, a positive electrode of the cell unit BAT1 and a negative electrode of the cell unit BAT2 are coupled to the port B0 through a path. A negative electrode of the cell unit BAT1 is coupled to the port P-, on a path between B0 and P+, the protection devices are embodied as a charging MOS CFET2 and a discharging MOS DFET2 coupled in series on the path. A gate of the charging MOS CFET2 is coupled to a pin P7 of a control chip C0 (i.e., the control module described in the previous embodiment), an end of the charging MOS CFET2 coupled to the cell unit BAT2 is coupled to the gate of the charging MOS CFET2 through a resistor, and is coupled to a pin P5 of the control chip C0 through a wire. An end of the charging MOS CFET2 coupled to the discharging MOS DFET2 is coupled to a pin P8 of the control chip C0 through a wire, a gate of the discharging MOS DFET2 is coupled to a pin P11 of the control chip C0, and an end of the discharging MOS DFET2 coupled to P+ is coupled to the gate of the discharging MOS DFET2 through a resistor, and is coupled to a pin P12 of the control chip C0 through another path having a resistor. The protection devices on the path between the port B0 and the port P- are embodied as a resistor R1, a charging MOS CFET1, and a discharging MOS DFET1 coupled in series on the path. A gate of the charging MOS CFET1 is coupled to a pin P6 of the control chip C0, and an end of the charging MOS CFET1 coupled to the port P- is coupled to the gate of the charging MOS CFET1 through a resistor, a gate of the discharging MOS DFET1 is coupled to a pin P10 of the control chip C0, and an end of the discharging MOS DFET1 coupled to the resistor R1 is coupled to the gate of the discharging MOS DFET1 through another resistor. An end of the resistor R1 (R1 is coupled in series on the path where P- is located) coupled to the negative electrode of BAT1 is coupled to a pin P1 of the control chip C0 and the other end of the resistor R1 is coupled to a pin P16 of the control chip C0. A pin P15 of the control chip C0 is grounded, and a pin P14 is coupled to an EXT_RL port. The positive electrode of BAT2 is coupled to a pin P4 of the control chip C0, the negative electrode of BAT2 is coupled to a pin P3 of the control chip C0, and the positive electrode of BAT 1 is coupled to a pin P2 of the control chip C0.

P + and B0 are used when charging or discharging BAT2. When BAT2 is charged, the control chip C0 detects a voltage drop across CFET2. When the voltage drop across CFET2 exceeds the preset charging overcurrent threshold or the preset charging short-circuit threshold, the control chip C0 controls CFET2 to be turned off, thereby achieving charging protection for BAT2. When BAT2 is discharged, the control chip C0 detects a voltage drop across DFET2. When the voltage drop across DFET2 exceeds the preset discharging overcurrent threshold or the preset discharging short-circuit threshold, the control chip C0 controls DFET2 to be turned off, thereby achieving discharging protection for BAT2. When BAT2 is charged or discharged, the control chip C0 can also determine whether BAT2 is over-discharged or over-charged according to the voltage drop across BAT2. If BAT2 is over-charged, CFET2 is turned off, and if BAT2 is over-discharged, DFET2 is turned off.

P- and B0 are used when charging or discharging BAT1. When BAT1 is charged, the control chip C0 detects a voltage drop across R1. When the voltage drop across R1 exceeds the preset charging overcurrent threshold or the preset charging short-circuit threshold, the control chip C0 controls CFET1 to be turned off, thereby realizing charging protection for BAT 1. When BAT1 is discharged, the control chip C0 detects the voltage drop across R1. When the voltage drop across R1 exceeds the preset discharging overcurrent threshold or the preset discharging short-circuit threshold, the control chip C0 controls DFET1 to be turned off, thereby achieving discharging protection of BAT1. Or when BAT1 is charged or discharged, the control chip C0 can also determine whether BAT1 is over-discharged or over-charged according to the voltage drop across BAT1. If BAT1 is over-charged, CFET1 is turned off, and if BAT1 is over-discharged, DFET1 is turned off.

When charging or discharging BAT1 and BAT2 at the same time, P- and P + are used. During charging, the control chip C0 detects the voltage drop across R1. When the voltage drop across R1 exceeds the preset charging overcurrent threshold or the preset charging short-circuit threshold, the control chip C0 controls CFET1 and/or CFET2 to be turned off, thereby realizing charging protection for BAT2 and BAT2. During discharging, the control chip C0 detects the voltage drop across R1. When the voltage drop across R1 exceeds the preset discharging overcurrent threshold or the preset discharging short-circuit threshold, the control chip C0 controls DFET1 and/or DFET2 to be turned off, thereby achieving discharging protection for BAT2 and BAT1. Or when BAT2 and BAT1 are charged or discharged, the control chip C0 can also determine whether BAT2 or BAT1 is charged or discharged according to the voltage drop across BAT2 and the voltage drop across BAT1 respectively. If over-discharging occurs, CFET1 and/or CFET2 are turned off. If over-discharging occurs, DFET1 and/or DFET2 are turned off.

In the structure illustrated in FIG. 10, since CFET2 and DFET2 are set on the path where P+ is located, CFET1 and DFET1 are set on the path where P- is located, and there is no MOS transistor on the path where B0 is located, when BAT1 or BAT2 is charged or discharged, the current only needs to flow through CFET1 and DFET1 or flow through CFET2 and DFET2 without flowing through a plurality of CFETs or DFETs, thereby reducing energy consumed by the MOS transistor and saving energy.

An embodiment of the present disclosure further provides an electronic device, and the electronic device may include a cell protection circuit according to any one of the foregoing embodiments. For its beneficial effects, reference may be made to any of the foregoing embodiments, and details are not described herein again.

For example, FIG. 11A to FIG. 11B are schematic diagrams of charging scenarios of the electronic device according to the embodiments of the present disclosure. The electronic device 90 shown in FIG. 11A to FIG. 11B may be the electronic device described in any of the foregoing embodiments. The electronic device 90 in Fig. 11A is provided with a port 91 (which may be exemplarily understood as a USB port or a Type-C port), and a charging device 92 (which may be exemplarily understood as a charger or a mobile power supply) is configured to supply power to cell units in the electronic device 90 through the port 91. When the voltage provided by the charging device 92 is higher than a sum of voltages of the cell units coupled in series in the electronic device 90, the charging device 92 is configured to charge all the cell units in the electronic device 90. When the voltage provided by the charging device 92 is less than the sum of voltages of the cell units coupled in series in the electronic device 90, the charging device 92 is configured to charge some of the cell units in the electronic device 90. Or when a boost module is provided in the electronic device 90, the boost module is configured to boost the voltage provided by the charging device 92, and all the cell units in the electronic device 90 are charged based on the voltage obtained after the boost processing.

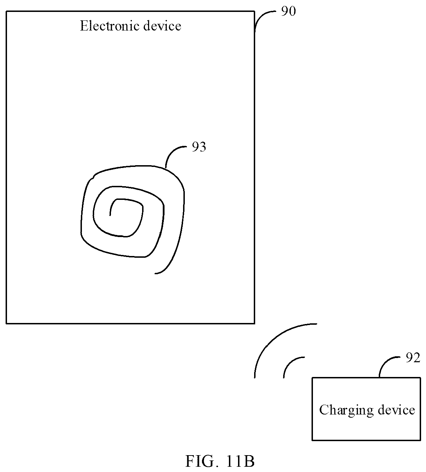

In FIG. 11B, a charging coil 93 is provided in the electronic device 90. The charging device 92 can wirelessly charge the electronic device 90 through the charging coil 93. When the voltage provided by the charging device 92 is higher than a sum of voltages of the cell units coupled in series in the electronic device 90, the charging device 92 is configured to charge all the cell units in the electronic device 90. When the voltage provided by the charging device 92 is lower than the sum of voltages of the cell units coupled in series in the electronic device 90, the charging device 92 is configured to charge some of the cell units in the electronic device 90. Or when a boost module is provided in the electronic device 90, the boost module is configured to boost the voltage provided by the charging device 92, and all the cell units in the electronic device 90 are charged based on the voltage obtained after the boost processing.

Certainly, the embodiments described herein with reference to FIG. 11A and FIG. 11B are explanatory, illustrative, and used to generally understand the present disclosure. The embodiments shall not be construed to limit the present disclosure.

In addition, the electronic device according to the embodiments of the present disclosure may select one or more of the cell units coupled in series to supply power to function modules according to voltage requirements of the function modules in the electronic device, or to supply power after performing voltage boosting or bucking on the voltage output by one of more cell units.

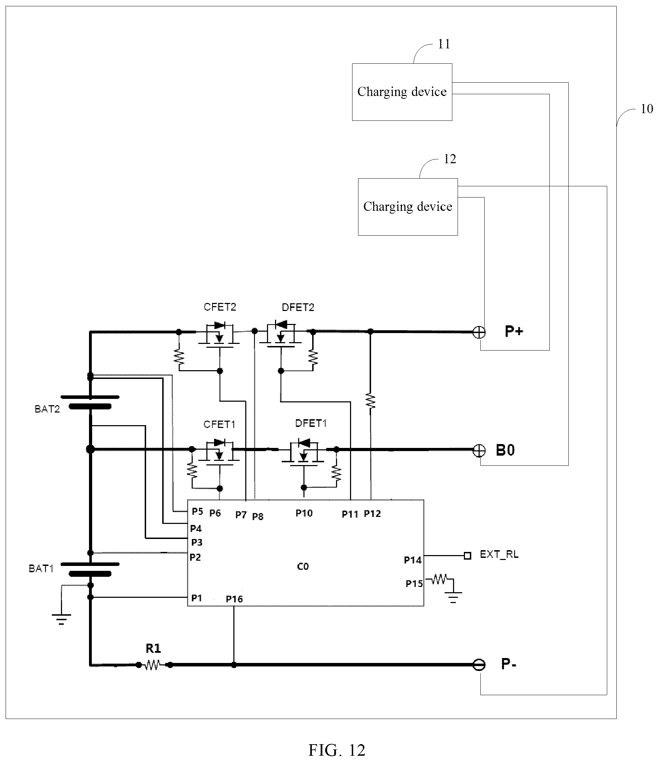

For example, FIG. 12 is a schematic diagram of an internal structure of an electronic device according to an embodiment of the present disclosure. As illustrated in FIG. 12, the electronic device 10 includes a cell protection circuit as illustrated in the FIG. 8, and a function module 11 and a function module 12. The function module 12 has a greater demand for voltage, and the function module 11 has a lower demand for voltage. The output interface P+ and the output interface B0 can be coupled to the function module 11 of the electronic device 10 to power the function module 11 by BAT2. It is also possible to couple the output interface P+ and the output interface P- to the function module 12 to supply power to the function module 12 of the electronic device 10 through BAT1 and BAT2. Certainly, this is only an example and not the only limitation of the present disclosure.

The above technical description can be referred to the accompanying drawings, which form a portion of the present disclosure, and an implementation of the embodiments of the present disclosure are described in the drawings. Although the embodiments are described in sufficient detail to enable those skilled in the art to implement the embodiments, the embodiments are non-limiting. Thus, other embodiments can be modified without departing from the scope of the described embodiments. For example, the sequence of operations described in the flowchart is non-limiting, so the sequence of two or more operations explained in the flowchart and described according to the flowchart can be changed according to the embodiments. As another example, in several embodiments, one or more operations explained in the flowchart and described in accordance with the flowchart are optional or removable. In addition, certain steps or functions may be added to the disclosed embodiments, or two or more steps may be sequentially replaced. All of these variations are considered to be included in the disclosed embodiments and the claims.

In addition, terminology is used in the foregoing technical description to provide a thorough understanding of the described embodiments. However, detailed descriptions are not required to implement the described embodiments. Therefore, the foregoing description of the embodiments has been presented for the purposes of illustration and description. The embodiments presented in the above description and the examples disclosed based on these embodiments are provided separately to add context and help to understand the described embodiments. The above description is not intended to be exhaustive or to limit the described embodiments to the precise form of the disclosure. Based on the above teachings, modifications, alternatives, and variations are possible. In some cases, well-known process steps have not been described in detail to avoid unnecessarily affecting the described embodiments.

## Claims

1. A cell protection circuit, comprising a control module (311), multistage cell units coupled in series and N output interfaces; wherein
a positive electrode of a first-stage cell unit (21) and a negative electrode of a last-stage cell unit are each coupled to an output interface, and a negative electrode of each upper-stage cell unit and a positive electrode of an adjacent lower-stage cell unit are coupled to a same output interface; the cell protection circuit is **characterised in that** it further includes
a protection module (314) comprising a charging protection sub-module (310) and a discharging protection sub-module (315) is coupled between at least one output interface in the N output interfaces,
other than the output interface coupled to the positive electrode of the first-stage cell unit (21) and the output interface coupled to the negative electrode of the last-stage cell unit, and a cell unit coupled to the at least one output interface; wherein
the control module (311) is coupled to the protection module, and is configured to control the protection module to be turned off when an electrical signal on a path where the protection module is located is abnormal; and
N is an integer greater than or equal to 3;
the charging protection sub-module (310) is coupled to the control module (311), the control module (311) is configured to control the charging protection sub-module (310) to be turned off in response to detecting an electrical signal on a path where the charging protection sub-module (310) is located is abnormal during charging of the cell unit (312); and
the discharging protection sub-module (315) is coupled to the control module (311), and the control module (311) is configured to control the discharging protection sub-module (315) to be turned off in response to detecting an electrical signal on a path where the discharging protection sub-module (315) is located is abnormal during discharging of the cell unit (312).

2. The circuit according to claim 1, wherein the at least one output interface comprises: output interfaces other than the output interface coupled to the negative electrode of the last-stage cell unit in the N output interfaces.

3. The circuit according to claim 1, wherein the at least one output interface comprises: output interfaces other than the output interface coupled to the positive electrode of the first-stage cell unit in the N output interfaces.

4. The circuit according to claim 1, wherein the at least one output interface at least comprises: the output interface coupled to the positive electrode of the first-stage cell unit and the output interface coupled to the negative electrode of the last-stage cell unit.

5. The circuit according to claim 1, wherein the charging protection sub-module (40) comprises a first MOS transistor (41), a first end of the first MOS transistor (41) is coupled to the control module (42), a second end of the first MOS transistor (41) and the first end of the first MOS transistor (41) are coupled through a resistor (43); and the second end of the first MOS transistor (41) and a third end of the first MOS transistor (41) are respectively coupled to the control module (42); and
the control module (42) is configured to determine whether an electrical signal on a path where the first MOS transistor (41) is located is abnormal based on a voltage drop across the second end of the first MOS transistor (41) and the third end of the first MOS transistor (41) during charging, and to control the first MOS transistor (41) to be turned off when the electrical signal on the path where the first MOS transistor (41) is located is abnormal.

6. The circuit according to claim 1, wherein the charging protection sub-module (50) comprises a charging detection component (51) and a charging switch (52) coupled in series on a path where the charging protection sub-module (50) is located, and both ends of the charging detection component (51) and a control end of the charging switch are coupled to the control module (53);
the control module (53) is configured to determine whether an electrical signal on a path where the charging detection component is located is abnormal based on a voltage drop across both ends of the charging detection component (51), and to control the charging switch (52) to be turned off when the electrical signal on the path where the charging detection component (51) is located is abnormal; and
wherein the charging detection component (51) is a MOS transistor (511) or a first resistor (512).

7. The circuit according to claim 6, wherein when the charging detection component (51) is the first resistor (512), the charging switch is a third MOS transistor (521); and
a first end of the third MOS transistor (521) is coupled to the control module (53), and the control module (53) is configured to control the third MOS transistor (521) to be turned off when a voltage drop across the first resistor (512) exceeds a preset threshold during charging of the cell unit (54).

8. The circuit according to claim 1, wherein the discharging protection sub-module (315) comprises a second MOS transistor (316), a first end of the second MOS transistor (316) is coupled to the control module (311), and a third end of the second MOS transistor (316) and the first end of the second MOS transistor (316) are coupled through a resistor (317), and the second end of the second MOS transistor (316) and the third end of the second MOS transistor (316) are respectively coupled to the control module (311); and
the control module (311) is configured to determine whether an electrical signal on a path where the second MOS transistor (316) is located is abnormal based on a voltage drop across a second end of the second MOS transistor (316) and the third end of the second MOS transistor (316) during discharging, and to control the second MOS transistor (316) to be turned off when the electrical signal on the path where the second MOS transistor (316) is located is abnormal.

9. The circuit according to claim 1, wherein the discharging protection sub-module (315) comprises: a discharging detection component (3151) and a discharging switch (3152) coupled in series on a path where the discharging protection sub-module (315) is located, and both ends of the discharging detection component (3151) and a control end of the discharging switch (3152) is coupled to the control module (311);
the control module (311) is configured to determine whether an electrical signal on the path where the discharging detection component (3151) is located is abnormal based on a voltage drop across both ends of the discharging detection component (3151) during discharging, and to control the discharging switch (3152) to be turned off when the electrical signal on a path where the discharging detection component (3151) is located is abnormal; and
wherein the discharging detection component (3151) is a MOS transistor (3153) or a second resistor (3154).

10. The circuit according to claim 1, wherein two electrodes of each cell unit are coupled to the control module, and when the control module detects an abnormal voltage drop across the cell unit, the control module is configured to control the protection module to be turned off.

11. The circuit according to claim 1, wherein the circuit comprises dual-stage cell units, the protection module is coupled on a path between the positive electrode of the first-stage cell unit and the output interface and a path between a negative electrode of the first-stage cell unit and the output interface.

12. The circuit according to claim 1, wherein the circuit comprises dual-stage cell units, the protection module is coupled on a path between a negative electrode of the first-stage cell unit and the output interface and a path between a negative electrode of a second-stage cell unit and the output interface.

13. The circuit according to claim 1, wherein the circuit comprises dual-stages cell units, the protection module is coupled on a path between the positive electrode of the first-stage cell unit and the output interface and a path between a negative electrode of a second-stage cell unit and the output interface.

## Patentansprüche

1. Zellschutzschaltung, ein Steuerungsmodul (311), mehrstufige Zelleinheiten, die in Reihe geschaltet sind, und N Ausgabeschnittstellen umfassend; wobei
eine positive Elektrode einer Zelleinheit der ersten Stufe (21) und eine negative Elektrode einer Zelleinheit der letzten Stufe jeweils an eine Ausgabeschnittstelle angeschlossen sind und eine negative Elektrode jeder Zelleinheit einer oberen Stufe und eine positive Elektrode einer benachbarten Zelleinheit einer unteren Stufe an eine gleiche Ausgabeschnittstelle angeschlossen sind;
die Zellschutzschaltung **dadurch gekennzeichnet ist, dass** sie weiterhin Folgendes umfasst:
ein Schutzmodul (314), ein Ladeschutzsubmodul (310) und ein Entladeschutzsubmodul (315) umfassend, die zwischen mindestens einer anderen Ausgabeschnittstelle in den N Ausgabeschnittstellen als die Ausgabeschnittstelle, die an die positive Elektrode der Zelleinheit der ersten Stufe (21) angeschlossen ist, und die Ausgabeschnittstelle, die an die negative Elektrode der Zelleinheit der letzten Stufe angeschlossen ist, und einer Zelleinheit angeschlossen sind, die an die mindestens eine Ausgabeschnittstelle angeschlossen ist; wobei
das Steuerungsmodul (311) an das Schutzmodul angeschlossen ist und eingerichtet ist, um das Schutzmodul zu steuern, dass es ausgeschaltet wird, wenn ein elektrisches Signal auf einem Pfad, wo das Schutzmodul lokalisiert ist, anormal ist; und
N eine ganze Zahl größer oder gleich 3 ist;
das Ladeschutzsubmodul (310) an das Steuerungsmodul (311) angeschlossen ist, das Steuerungsmodul (311) eingerichtet ist, um das Ladeschutzsubmodul (310) zu steuern, dass es ausgeschaltet wird als Reaktion darauf, dass ein elektrisches Signal auf einem Pfad, wo das Ladeschutzsubmodul (310) lokalisiert ist, beim Laden der Zelleinheit (312) als anormal detektiert wird; und
das Entladeschutzsubmodul (315) an das Steuerungsmodul (311) angeschlossen ist, das Steuerungsmodul (311) eingerichtet ist, um das Entladeschutzsubmodul (315) zu steuern, dass es ausgeschaltet wird als Reaktion darauf, dass ein elektrisches Signal auf einem Pfad, wo das Entladeschutzsubmodul (315) lokalisiert ist, beim Entladen der Zelleinheit (312) als anormal detektiert wird.

2. Schaltung nach Anspruch 1, wobei die mindestens eine Ausgabeschnittstelle Folgendes umfasst: andere Ausgabeschnittstellen als die Ausgabeschnittstelle, die an die negative Elektrode der Zelleinheit der letzten Stufe angeschlossen ist, in den N Ausgabeschnittstellen.

3. Schaltung nach Anspruch 1, wobei die mindestens eine Ausgabeschnittstelle Folgendes umfasst: andere Ausgabeschnittstellen als die Ausgabeschnittstelle, die an die positive Elektrode der Zelleinheit der ersten Stufe angeschlossen ist, in den N Ausgabeschnittstellen.

4. Schaltung nach Anspruch 1, wobei die mindestens eine Ausgabeschnittstelle mindestens Folgendes umfasst: die Ausgabeschnittstelle, die an die positive Elektrode der Zelleinheit der ersten Stufe angeschlossen ist, und die Ausgabeschnittstelle, die an die negative Elektrode der Zelleinheit der letzten Stufe angeschlossen ist.

5. Schaltung nach Anspruch 1, wobei das Ladeschutzsubmodul (40) einen ersten MOS-Transistor (41) umfasst, ein erstes Ende des ersten MOS-Transistors (41) an das Steuerungsmodul (42) angeschlossen ist, ein zweites Ende des ersten MOS-Transistors (41) und das erste Ende des ersten MOS-Transistors (41) durch einen Widerstand (43) gekoppelt sind; und das zweite Ende des ersten MOS-Transistors (41) und ein drittes Ende des ersten MOS-Transistors (41) jeweils an das Steuerungsmodul (42) angeschlossen sind; und
das Steuerungsmodul (42) eingerichtet ist, um zu bestimmen, ob ein elektrisches Signal auf einem Pfad, wo der erste MOS-Transistor (41) lokalisiert ist, anormal ist, auf der Grundlage eines Spannungsabfalls über das zweite Ende des ersten MOS-Transistors (41) und das dritte Ende des ersten MOS-Transistors (41) beim Laden, und den ersten MOS-Transistor (41) zu steuern, dass er ausgeschaltet wird, wenn das elektrische Signal auf dem Pfad, wo der erste MOS-Transistor (41) lokalisiert ist, anormal ist.

6. Schaltung nach Anspruch 1, wobei das Ladeschutzsubmodul (50) eine Ladedetektionskomponente (51) und einen Ladeschalter (52) umfasst, die auf einem Pfad in Reihe geschaltet sind, wo das Ladeschutzsubmodul (50) lokalisiert ist, und beide Enden der Ladedetektionskomponente (51) und ein Steuerungsende des Ladeschalters an das Steuerungsmodul (53) angeschlossen sind;
das Steuerungsmodul (53) eingerichtet ist, um zu bestimmen, ob ein elektrisches Signal auf einem Pfad, wo die Ladedetektionskomponente lokalisiert ist, anormal ist, auf der Grundlage eines Spannungsabfalls über beide Enden der Ladedetektionskomponente (51), und den Ladeschalter (52) zu steuern, dass er ausgeschaltet wird, wenn das elektrische Signal auf dem Pfad, wo die Ladedetektionskomponente (51) lokalisiert ist, anormal ist; und
wobei die Ladedetektionskomponente (51) ein MOS-Transistor (511) oder ein erster Widerstand (512) ist.

7. Schaltung nach Anspruch 6, wobei, wenn die Ladedetektionskomponente (51) der erste Widerstand (512) ist, der Ladeschalter ein dritter MOS-Transistor (521) ist; und
ein erstes Ende des dritten MOS-Transistors (521) an das Steuerungsmodul (53) angeschlossen ist und das Steuerungsmodul (53) eingerichtet ist, um den dritten MOS-Transistor (521) zu steuern, dass er ausgeschaltet ist, wenn ein Spannungsabfall über den ersten Widerstand (512) beim Laden der Zelleinheit (54) einen voreingestellten Schwellenwert überschreitet.

8. Schaltung nach Anspruch 1, wobei das Entladeschutzsubmodul (315) einen zweiten MOS-Transistor (316) umfasst, ein erstes Ende des zweiten MOS-Transistors (316) an das Steuerungsmodul (311) angeschlossen ist und ein drittes Ende des zweiten MOS-Transistors (316) und das erste Ende des zweiten MOS-Transistors (316) durch einen Widerstand (317) gekoppelt sind; und das zweite Ende des zweiten MOS-Transistors (316) und das dritte Ende des zweiten MOS-Transistors (316) jeweils an das Steuerungsmodul (311) angeschlossen sind; und
das Steuerungsmodul (311) eingerichtet ist, um zu bestimmen, ob ein elektrisches Signal auf einem Pfad, wo der zweite MOS-Transistor (316) lokalisiert ist, anormal ist, auf der Grundlage eines Spannungsabfalls über ein zweites Ende des zweiten MOS-Transistors (316) und das dritte Ende des zweiten MOS-Transistors (316) beim Entladen, und den zweiten MOS-Transistor (316) zu steuern, dass er ausgeschaltet wird, wenn das elektrische Signal auf dem Pfad, wo der zweite MOS-Transistor (316) lokalisiert ist, anormal ist.

9. Schaltung nach Anspruch 1, wobei das Entladeschutzsubmodul (315) eine Entladedetektionskomponente (3151) und einen Entladeschalter (3152) umfasst, die auf einem Pfad in Reihe geschaltet sind, wo das Entladeschutzsubmodul (315) lokalisiert ist, und beide Enden der Entladedetektionskomponente (3151) und ein Steuerungsende des Entladeschalters (3152) an das Steuerungsmodul (311) angeschlossen sind;
das Steuerungsmodul (311) eingerichtet ist, um zu bestimmen, ob ein elektrisches Signal auf dem Pfad, wo die Entladedetektionskomponente (3151) lokalisiert ist, anormal ist, auf der Grundlage eines Spannungsabfalls über beide Enden der Ladedetektionskomponente (3151) beim Entladen, und den Entladeschalter (3152) zu steuern, dass er ausgeschaltet wird, wenn das elektrische Signal auf einem Pfad, wo die Entladedetektionskomponente (3151) lokalisiert ist, anormal ist; und
wobei die Entladedetektionskomponente (3151) ein MOS-Transistor (3153) oder ein zweiter Widerstand (3154) ist.

10. Schaltung nach Anspruch 1, wobei zwei Elektroden jeder Zelleinheit an das Steuerungsmodul angeschlossen sind, und wenn das Steuerungsmodul einen anormalen Spannungsabfall über die Zelleinheit detektiert, das Steuerungsmodul eingerichtet ist, um das Schutzmodul zu steuern, dass es ausgeschaltet wird.

11. Schaltung nach Anspruch 1, wobei die Schaltung zweistufige Zelleinheiten umfasst, das Schutzmodul auf einem Pfad zwischen der positiven Elektrode der Zelleinheit der ersten Stufe und der Ausgabeschnittstelle und einem Pfad zwischen einer negativen Elektrode der Zelleinheit der ersten Stufe und der Ausgabeschnittstelle angeschlossen ist.

12. Schaltung nach Anspruch 1, wobei die Schaltung zweistufige Zelleinheiten umfasst, das Schutzmodul auf einem Pfad zwischen einer negativen Elektrode der Zelleinheit der ersten Stufe und der Ausgabeschnittstelle und einem Pfad zwischen einer negativen Elektrode einer Zelleinheit der zweiten Stufe und der Ausgabeschnittstelle angeschlossen ist.

13. Schaltung nach Anspruch 1, wobei die Schaltung zweistufige Zelleinheiten umfasst, das Schutzmodul auf einem Pfad zwischen der positiven Elektrode der Zelleinheit der ersten Stufe und der Ausgabeschnittstelle und einem Pfad zwischen einer negativen Elektrode einer Zelleinheit der zweiten Stufe und der Ausgabeschnittstelle angeschlossen ist.

## Revendications

1. Circuit de protection de cellules, comprenant un module de commande (311), des unités cellulaires multi-étagées reliées en série et N interfaces de sortie ; dans lequel
une électrode positive d'une unité cellulaire de premier étage (21) et une électrode négative d'une unité cellulaire de dernier étage sont chacune reliées à une interface de sortie, et une électrode négative de chaque unité cellulaire d'étage supérieur et une électrode positive d'une unité cellulaire adjacente d'étage inférieur sont reliées à une même interface de sortie ; le circuit de protection de cellules est **caractérisé en ce qu'**il comprend en outre
un module de protection (314) comprenant un sous-module de protection de charge (310) et un sous-module de protection de décharge (315) est relié entre au moins une interface de sortie dans les N interfaces de sortie autre que l'interface de sortie reliée à l'électrode positive de l'unité cellulaire de premier étage (21) et de l'interface de sortie reliée à l'électrode négative de l'unité cellulaire de dernier étage, et une unité cellulaire reliée à l'au moins une interface de sortie ; dans lequel
le module de commande (311) est relié au module de protection, et est configuré pour commander le module de protection de façon qu'il soit désactivé lorsqu'un signal électrique sur un chemin sur lequel se trouve le module de protection est anormal ; et
N est un nombre entier supérieur ou égal à 3 ;
le sous-module de protection de charge (310) est relié au module de commande (311), le module de commande (311) est configuré pour commander la désactivation du sous-module de protection de charge (310) en réponse à la détection qu'un signal électrique sur un chemin sur lequel se trouve le sous-module de protection de charge (310) est anormal pendant la charge de l'unité cellulaire (312) ; et
le sous-module de protection contre la décharge (315) est relié au module de commande (311), et le module de commande (311) est configuré pour commander la désactivation du sous-module de protection contre la décharge (315) en réponse à la détection qu'un signal électrique sur un chemin sur lequel se trouve le sous-module de protection contre la décharge (315) est anormal pendant la décharge de l'unité cellulaire (312).

2. Circuit selon la revendication 1, dans lequel l'au moins une interface de sortie comprend : des interfaces de sortie autres que l'interface de sortie reliées à l'électrode négative de l'unité cellulaire de dernier étage dans les N interfaces de sortie.

3. Circuit selon la revendication 1, dans lequel l'au moins une interface de sortie comprend : des interfaces de sortie autres que l'interface de sortie reliées à l'électrode positive de l'unité cellulaire du premier étage dans les N interfaces de sortie.

4. Circuit selon la revendication 1, dans lequel l'au moins une interface de sortie comprend au moins : l'interface de sortie reliée à l'électrode positive de l'unité cellulaire de premier étage et l'interface de sortie reliée à l'électrode négative de l'unité cellulaire de dernier étage.

5. Circuit selon la revendication 1, dans lequel le sous-module de protection de charge (40) comprend un premier transistor MOS (41), une première extrémité du premier transistor MOS (41) est reliée au module de commande (42), une deuxième extrémité du premier transistor MOS (41) et la première extrémité du premier transistor MOS (41) sont reliées par l'intermédiaire d'une résistance (43) ; et la deuxième extrémité du premier transistor MOS (41) et une troisième extrémité du premier transistor MOS (41) sont respectivement reliées au module de commande (42) ; et
le module de commande (42) est configuré pour déterminer si un signal électrique sur un chemin sur lequel se trouve le premier transistor MOS (41) est anormal sur la base d'une chute de tension entre la deuxième extrémité du premier transistor MOS (41) et la troisième extrémité du premier transistor MOS (41) pendant la charge, et pour commander la désactivation du premier transistor MOS (41) lorsque le signal électrique sur le chemin sur lequel se trouve le premier transistor MOS (41) est anormal.

6. Circuit selon la revendication 1, dans lequel le sous-module de protection de charge (50) comprend un composant de détection de charge (51) et un commutateur de charge (52) reliés en série sur un chemin sur lequel le sous-module de protection de charge (50) est situé, et les deux extrémités du composant de détection de charge (51) et une extrémité de commande du commutateur de charge sont reliées au module de commande (53) ;
le module de commande (53) est configuré pour déterminer si un signal électrique sur un chemin sur lequel se trouve le composant de détection de charge est anormal sur la base d'une chute de tension aux deux extrémités du composant de détection de charge (51), et pour commander la désactivation du commutateur de charge (52) lorsque le signal électrique sur le chemin sur lequel se trouve le composant de détection de charge (51) est anormal ; et
dans lequel le composant de détection de charge (51) est un transistor MOS (511) ou une première résistance (512) .

7. Circuit selon la revendication 6, dans lequel lorsque le composant de détection de charge (51) est la première résistance (512), le commutateur de charge est un troisième transistor MOS (521) ; et
une première extrémité du troisième transistor MOS (521) est reliée au module de commande (53), et le module de commande (53) est configuré pour commander la désactivation du troisième transistor MOS (521) lorsqu'une chute de tension à travers la première résistance (512) dépasse un seuil prédéfini pendant la charge de l'unité cellulaire (54).

8. Circuit selon la revendication 1, dans lequel le sous-module de protection contre la décharge (315) comprend un deuxième transistor MOS (316), une première extrémité du deuxième transistor MOS (316) est reliée au module de commande (311), et une troisième extrémité du deuxième transistor MOS (316) et la première extrémité du deuxième transistor MOS (316) sont reliées par l'intermédiaire d'une résistance (317), et la deuxième extrémité du deuxième transistor MOS (316) et la troisième extrémité du deuxième transistor MOS (316) sont respectivement reliés au module de commande (311) ; et
le module de commande (311) est configuré pour déterminer si un signal électrique sur un chemin sur lequel se trouve le deuxième transistor MOS (316) est anormal sur la base d'une chute de tension entre une deuxième extrémité du deuxième transistor MOS (316) et la troisième extrémité du deuxième transistor MOS (316) pendant la décharge, et pour commander la désactivation du deuxième transistor MOS (316) lorsque le signal électrique sur le chemin sur lequel se trouve le deuxième transistor MOS (316) est anormal.

9. Circuit selon la revendication 1, dans lequel le sous-module de protection contre la décharge (315) comprend : un composant de détection de décharge (3151) et un interrupteur de décharge (3152) reliés en série sur un chemin sur lequel le sous-module de protection contre la décharge (315) est situé, et les deux extrémités du composant de détection de décharge (3151) et une extrémité de commande du commutateur de décharge (3152) sont reliées au module de commande (311) ;
le module de commande (311) est configuré pour déterminer si un signal électrique sur le chemin sur lequel se trouve le composant de détection de décharge (3151) est anormal sur la base d'une chute de tension aux deux extrémités du composant de détection de décharge (3151) pendant la décharge, et pour commander la désactivation du commutateur de décharge (3152) lorsque le signal électrique sur un chemin sur lequel se trouve le composant de détection de décharge (3151) est anormal ; et
dans lequel le composant de détection de décharge (3151) est un transistor MOS (3153) ou une deuxième résistance (3154).

10. Circuit selon la revendication 1, dans lequel deux électrodes de chaque unité cellulaire sont reliées au module de commande, et lorsque le module de commande détecte une chute de tension anormale aux bornes de l'unité cellulaire, le module de commande est configuré pour commander la désactivation du module de protection.

11. Circuit selon la revendication 1, le circuit comprenant des unités cellulaire à deux étages, le module de protection est relié sur un chemin entre l'électrode positive de l'unité cellulaire de premier étage et l'interface de sortie et un chemin entre une électrode négative de l'unité cellulaire de premier étage et l'interface de sortie.

12. Circuit selon la revendication 1, le circuit comprenant des unités cellulaire à deux étages, le module de protection est relié sur un chemin entre une électrode négative de l'unité cellulaire de premier étage et l'interface de sortie et un chemin entre une électrode négative d'une unité cellulaire de deuxième étage et l'interface de sortie.

13. Circuit selon la revendication 1, le circuit comprenant des unités cellulaire à deux étages, le module de protection est relié sur un chemin entre l'électrode positive de l'unité cellulaire de premier étage et l'interface de sortie et un chemin entre une électrode négative d'une unité cellulaire de deuxième étage et l'interface de sortie.
